# EUROPÄISCHE PATENTSCHRIFT

(11) **EP 3 101 302 B1**
(45) Veröffentlichungstag und Bekanntmachung des Hinweises auf die Patenterteilung: **29.01.2020**
(21) Anmeldenummer: 16001250.6
(22) Anmeldetag: 02.06.2016
(51) Int. Cl.: F16D 55/2265

(54) **BREMSTRÄGER FÜR EINE SCHEIBENBREMSE**
BRAKE CARRIER FOR A BRAKE DISC
SUPPORT DE FREIN POUR UN FREIN À DISQUE

(30) Priorität: 02.06.2015 DE 102015108665
(43) Veröffentlichungstag der Anmeldung: 07.12.2016
(73) Patentinhaber: KNORR-BREMSE Systeme für Nutzfahrzeuge GmbH, 80809 München (DE)
(72) Erfinder: Stöger, Christian, D-94486 Osterhofen (DE)
(74) Vertreter: Specht, Peter

(56) Entgegenhaltungen:
- EP-A1- 1 715 211
- EP-A1- 3 032 125
- EP-A2- 1 801 447
- DE-A1-102004 002 571
- US-A1- 2011 042 172
- US-A1- 2014 020 992

## Beschreibung

Die vorliegende Erfindung betrifft einen Bremsträger für eine Scheibenbremse nach dem Oberbegriff des Anspruchs 1.

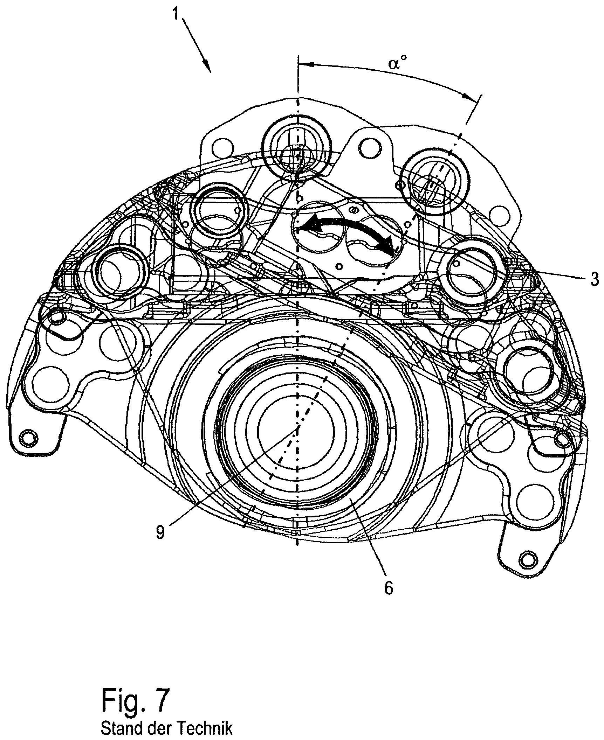

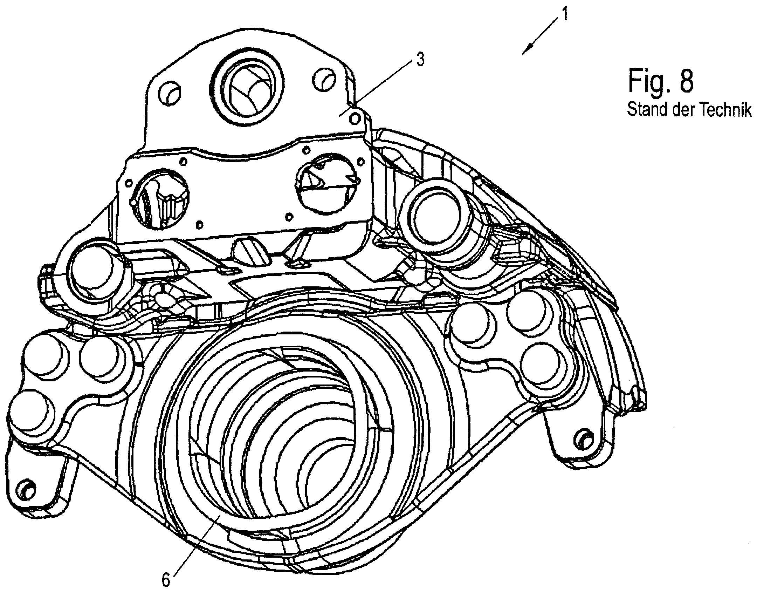

Ein aus dem Stand der Technik bekannter Bremsträger ist mit einer Fahrzeugachse positionsfest axial bzw. parallel zum Achskörper der Fahrzeugachse verschraubbar bzw. verschraubt (Fig. 7 und Fig. 8). Der Bremsträger nimmt die Bremsbeläge der Scheibenbremse auf und leitet durch einen Bremsvorgang auftretende Reaktionskräfte in den Achskörper ein. Darüber hinaus dient der Bremsträger als Fixierungsbauteil für einen Bremssattel einer Scheibenbremse, insbesondere einer Schiebesattel-Scheibenbremse, in dem eine Zuspanneinheit bzw. -mechanik angeordnet ist.

Derartige Bremsträger für Scheibenbremsen werden üblicherweise einstückig durch ein Urformverfahren hergestellt, vorzugsweise im Sandgießverfahren, wobei als Werkstoff vorzugsweise Gusseisen mit Kugelgraphit bzw. Sphäroguss eingesetzt wird. Das so entstandene Gussrohteil wird anschließend spanend fertig bearbeitet, so dass ein einbaubarer Bremsträger entsteht. Derartige einstückige Bremsträger aus Sphäroguss nach dem Stand der Technik haben sich grundsätzlich bewährt.

Um zusätzlichen Bauraum für angrenzende Bauteile der Scheibenbremse zu schaffen oder die Scheibenbremse in einen zur Verfügung stehenden Bauraum an einem Fahrzeug anzupassen, kann es erforderlich sein, die Scheibenbremse um die Mitte der Fahrzeugachse um einen definierten Winkelbetrag zu drehen (siehe dazu Fig. 7).

Insbesondere ein weit auskragender Bremszylinder, mit dem die Zuspanneinheit der Scheibenbremse betätigt wird, bereitet dabei häufig Probleme. In vielen Fällen entstehen zwischen dem Bremszylinder und anderen Fahrwerkbauteilen -wie z.B. Luftfederbälge- Bauraumkonflikte, so dass die Scheibenbremse entsprechend gedreht werden muss, um den Bremszylinder außerhalb des vorgesehenen Bauraums eines anderen Fahrwerkbauteils anordnen zu können.

Bisher wurde die Drehung der Scheibenbremse durch verschiedene Achsvarianten realisiert, wobei ein Achsflansch das variantentreibende Bauteil ist, da durch die Winkellage des Achsflansches relativ zu einer horizontalen, fahrzeugbezogene Ebene -wie z.B. die Oberfläche der Fahrbahn- bzw. einer zu dieser Ebene senkrecht stehenden Ebene der Winkelbetrag der Drehung der Scheibenbremse definiert ist (siehe dazu ebenfalls Fig. 7).

Darüber hinaus weist ein Bremsträger nach dem Stand der Technik auf Grund der Festigkeitsanforderungen an den Bremsträger sowie auf Grund eines beengten Bauraumes für den Bremsträger und der daraus resultierenden, bisherigen geometrischen Gestaltung ein Gewicht auf, das weiteres Optimierungspotential bieten sollte.

Dokument EP 2 690 303 A1 offenbart eine Schiebesattelscheibenbremse, in der die beiden die Nabenschwünge verbindenden Rahmenteile eine verschiedene vertikale Erstreckung aufweisen.

Der Erfindung liegt daher die Aufgabe zu Grunde, einen Bremsträger zu schaffen, der die o.g. Probleme überwindet.

Die Erfindung löst diese Aufgabe durch den Gegenstand des Anspruchs 1.

Demnach ist es vorgesehen, dass die Auflageflächen in einer gemeinsamen Ebene liegen, die um einen Winkel α relativ zu einer horizontalen, fahrzeugbezogenen Ebene E verdreht ist.

Der Erfindung liegt also der Gedanke zu Grunde, dass das variantentreibende Bauteil, um einen Winkelversatz des Bremsträgers relativ zu einer horizontalen, fahrzeugbezogene Ebene zu erzeugen, der Bremsträger selbst ist. Insofern unterliegt der Achskörper durch die Erfindung in vorteilhafter Weise keinerlei geometrisch nachteiligen Änderungen, um Bauraum für Elemente der Zuspannmechanik einer Scheibenbremse zu schaffen. Dies ist im Vergleich zum Stand der Technik erheblich kostengünstiger und damit besonders vorteilhaft.

In einer besonders bevorzugten Ausführungsvariante der Erfindung liegt die Befestigungsebene zwischen Bremsträger und dem Achsflansch des Achskörpers radial zu der Fahrzeug-Radachse. Durch die radiale Befestigungsebene wird in vorteilhafter Weise Bauraum im Bereich des Bremssattels geschaffen, der nach dem Stand der Technik zur axialen bzw. parallel zur Fahrzeug-Radachse erfolgenden Befestigung belegt ist. Dadurch können die Führungselemente, durch den der Bremssattel verschieblich geführt ist einen größeren Abstand zueinander erhalten, woraus in vorteilhafter Weise eine stabilere und reibungsärmere Führung des Bremssattels resultiert.

In einer weiteren bevorzugten Ausführungsvariante der Erfindung weist der Bremsträger auf jeder Seite der Bremsscheibe zwei Paare von Trägerhörnern auf. Die Trägerhörner bilden jeweils untere Stützstellen sowie seitliche Stützstellen für jeweils einen Bremsbelag aus. Die Stützstellen sind vorzugsweise durch ein Härteverfahren verschleißbeständig ausgeführt. Dadurch ergibt sich in vorteilhafter Weise eine dauerhaft exakte Führung der Bremsbeläge im Bremsträger.

Der Bremsträger weist ferner verschiedene Geometrieelemente auf, die jeweils vorteilhaft verformungsreduzierend wirken und damit ebenso vorteilhaft die mechanischen Spannungen im Bremsträger reduzieren, so dass dadurch auch -ebenfalls vorteilhaft- Werkstoff eingespart werden kann.

Ein solches Geometrieelement ist ein aufgedickten Steg im Bereich des Nabenschwungs des Bremsträgers. Ein weiteres solches Geometrieelement ist ein torusförmiger Konturzug, den die der Bremsscheibe zugewandten Geometrie des Scheibenumgriffs im Bereich des Rahmenteils des Bremsträgers aufweist. Eine konsolenartige Verdickung im Bereich der Befestigungsbohrungen ist ebenfalls ein solches Geometrieelement. Die konsolenartige Verdickung ist jeweils durch eine Verstärkungsrippe am Rahmenteil abgestützt. Ein weiteres solches Geometrieelement ist eine Entlastungskerbe, die jeweils im Übergangsbereich der unteren Stützstelle zur oberen Stützstelle bzw. zum Trägerhorn des Bremsträgers angeordnet ist.

Ferner weist der Bremsträger auf seiner der Fahrzeuglängsachse zugewandten Seite eine Verstärkungsrippe auf, die dem Nabenschwung folgt. Die Verstärkungsrippe setzt sich jeweils im Bereich des Rahmenteils fort und läuft im unteren Bereich des Rahmenteils aus. Insofern ist die Verstärkungsrippe ebenfalls ein Geometrieelement, das vorteilhaft verformungsreduzierend wirkt und damit ebenso vorteilhaft die mechanischen Spannungen im Bremsträger reduzieren, so dass dadurch auch - ebenfalls vorteilhaft- Werkstoff eingespart werden kann.

Ferner weist der Bremsträger ausgesteifte Geometrieausprägungen auf, durch die in vorteilhafter Weise ein kurzer, direkter Kraftfluss zwischen der Krafteinleitung jeweils über die Trägerhörner bzw. über die Stützstellen und der Kraftausleitung jeweils über die Befestigungs-bohrungen realisiert ist. Dadurch kann an anderer Stelle des Bremträgers vorteilhaft Werkstoff eingespart werden. Dementsprechend weist der Bremsträger₌im Bereich des Scheibenumgriffs mehrere Taschen bzw. Ausnehmungen auf.

Die Erfindung schafft auch eine Scheibenbremse für ein Fahrzeug, die zumindest einen Bremssattel, insbesondere einen Schiebesattel, eine Zuspanneinheit und eine Bremsscheibe sowie einen erfindungsgemäßen Bremsträger aufweist. Eine solche Scheibenbremse ist leichter, kostengünstiger und lässt sich einfacher und damit vorteilhaft in vorhandene Bauräume im Fahrwerkbereich eines Fahrzeugs integrieren.

Die Erfindung schafft ebenfalls eine Achsanordnung eines Fahrzeugs mit wenigstens einer Scheibenbremse, die einen erfindungsgemäßen Bremsträger aufweist. Dadurch kann der Achskörper einer solchen Achsanordnung in besonders hohen Mengen und damit kostengünstig und vorteilhaft hergestellt werden, da das variantentreibende Bauteil nicht mehr der Achskörper, sondern der erfindungsgemäße Bremsträger ist.

Vorteilhafte Ausführungen des erfindungsgemäßen Bremsträgers sind den Unteransprüchen zu entnehmen.

Ausführungsbeispiele eines erfindungsgemäßen Bremsträgers sind in den Zeichnungen dargestellt und werden im Folgenden näher beschrieben. Es zeigen:
- Figur 1a:: eine Schnittdarstellung einer Scheibenbremsenanordnung an einer Fahrzeugachse mit einem erfindungsgemäßen Bremsträger, wobei die Zuspanneinheit hier um einen positiven Winkel relativ zu einem Fixierpunkt des Achskörpers am Fahrzeug verdreht ist;
- Figur 1b:: eine Schnittdarstellung einer Scheibenbremsenanordnung an einer Fahrzeugachse mit einem erfindungsgemäßen Bremsträger, wobei die Zuspanneinheit hier um einen negativen Winkel relativ zu einem Fixierpunkt des Achskörpers am Fahrzeug verdreht ist;
- Figur 2:: eine räumliche Ansicht eines erfindungsgemäßen Bremsträgers;
- Figur 3:: eine Draufsicht des erfindungsgemäßen Bremsträgers nach Fig. 2;
- Figur 4:: eine Unteransicht des erfindungsgemäßen Bremsträgers nach Fig. 2;
- Figur 5:: eine Seitenansicht von rechts des erfindungsgemäßen Bremsträgers nach Fig. 2;
- Figur 6:: eine Vorderansicht des erfindungsgemäßen Bremsträgers nach Fig. 2;
- Figur 7:: eine räumliche Darstellung einer Scheibenbremsenanordnung an einer Fahrzeugachse mit einem Bremsträger nach dem Stand der Technik, wobei die Zuspanneinheit hier um einen positiven Winkel relativ zu einem Fixierpunkt des Achskörpers am Fahrzeug verdreht ist;
- Figur 8:: eine räumliche Darstellung einer Scheibenbremsenanordnung an einer Fahrzeugachse mit einem Bremsträger nach dem Stand der Technik;

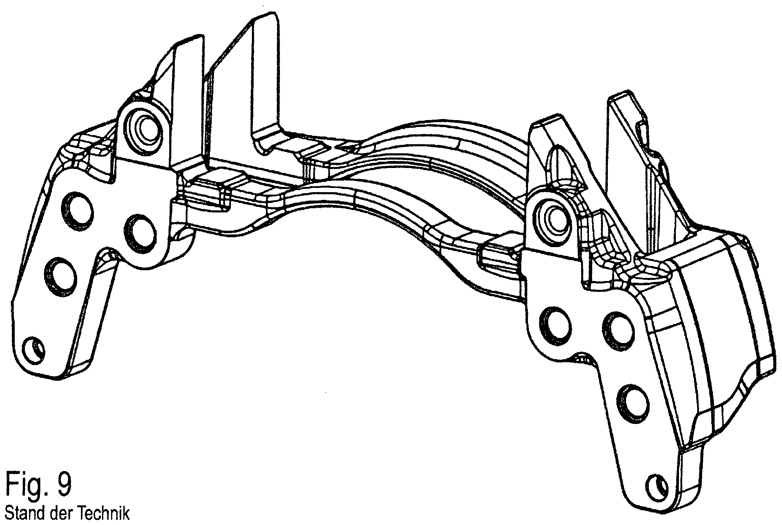

- Figur 9:: eine räumliche Darstellung eines Bremsträgers nach dem Stand der Technik.

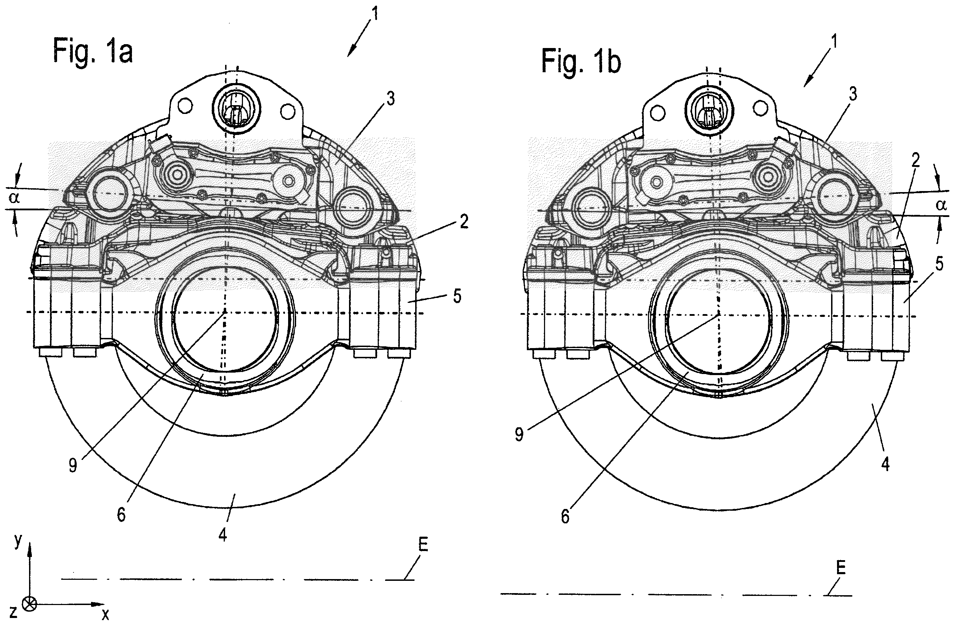

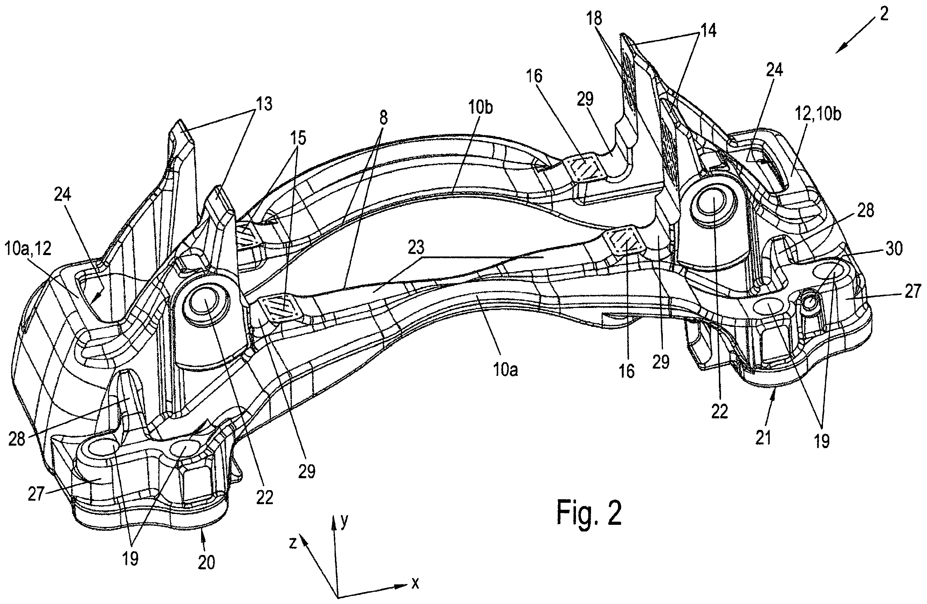

Nachfolgend werden Begriffe wie "oben", "unten", "rechts", "links" usw. verwendet, welche sich auf die Ausrichtung des Bremsträgers entsprechend zu Fig. 2 beziehen. Ein kartesisches Koordinatensystem in Fig. 1a und Fig. 2 dient der weiteren Orientierung.

In Fig. 1a und Fig. 1b sind jeweils eine Scheibenbremse 1 mit einem Bremsträger 2 im Schnitt dargestellt. Die Scheibenbremse 1 weist einen Bremssattel 3 auf, in dem eine Zuspanneinheit der Scheibenbremse 1 angeordnet ist. Die Zuspanneinheit wirkt auf eine Bremsscheibe 4 ein, die drehfest mit einer drehbaren Fahrzeugachse 9 eines Fahrzeugs verbunden ist.

Der Bremssattel 3 ist - vorzugsweise schiebbar - an dem Bremsträger 2 angeordnet. Der Bremsträger 2 ist wiederum unverschiebbar an einem Achsflansch 5 festgelegt. Der Bremsträger 2 ist an dem Achsflansch 5 positionsfest um einen Winkel α relativ zu einer horizontalen, fahrzeugbezogene Ebene E -wie z.B. die Oberfläche der Fahrbahn- gedreht, radial zu einem Achskörper 6 befestigt. Als Befestigungsmittel dienen Schrauben 7, die den Bremsträger 7 mit dem Achsflansch 5 verbinden.

Der Bremssattel 3 der Scheibenbremse 1 in Fig. 1a ist um einen definierten Winkel α im Uhrzeigersinn relativ zu einer horizontalen, fahrzeugbezogene Ebene E -wie z.B. die Oberfläche der Fahrbahn- zu der radial zu dem Achskörper 6 der Fahrzeugachse liegenden Befestigungsebene A verdreht, während der Bremssattel 3 in Fig. 1b um einen definierten Winkel α gegen den Uhrzeigersinn relativ zu einer horizontalen, fahrzeugbezogene Ebene E -wie z.B. die Oberfläche der Fahrbahn- zu der radial zu dem Achskörper 6 der Fahrzeugachse liegenden Befestigungsebene verdreht ist.

Der jeweilige Winkel a, um den der Bremssattel 3 der Scheibenbremse 1 jeweils verdreht ist, ist in der Geometrie des Bremsträgers 2 "eingeprägt", so dass -im Gegensatz zu Bremsträgern nach dem Stand der Technik- jeweils der Bremsträger 2 das variantentreibende Bauteil zur Realisierung von Bauräumen z.B. für einen Bremszylinder (hier nicht dargestellt) ist. Der Achskörper 6 bzw. der Achsflansch 5 weisen also stets die gleiche Geometrie auf.

Mit dem Begriff "eingeprägt" ist gemeint, dass der definierte Winkel a, um den der Bremssattel 3 der Scheibenbremse 1 jeweils relativ zu einer horizontalen, fahrzeugbezogene Ebene E -wie z.B. die Oberfläche der Fahrbahn- verdreht ist, durch einen maßlichen Horizontalversatz der Auflageflächen 20, 21 des Bremsträgers 2, die jeweils die Befestigungsebene A des Achsflansches 5 berühren, realisiert ist. Dadurch ist eine Variantenbildung zur Realisierung von Bauräumen von angrenzenden Bauteilen in vorteilhafter Weise auf ein vergleichsweises kostengünstiges Bauteil -nämlich auf den Bremsträger 2- beschränkt.

In Fig. 2 ist der Bremsträger 2 in einer räumlichen Ansicht dargestellt. Der Bremsträger 2 überspannt bzw. umgreift rahmenartig als Scheibenumgriff 8 bzw. als Scheibenrahmen eine in Bezug auf die Fahrzeug-Radachse / Bremsscheibendrehachse 9 (hier nicht dargestellt, siehe Fig. 1a und 1b) axial äußeren Abschnitt der drehfest mit der drehbaren Fahrzeugachse verbundenen Bremsscheibe 4 (hier nicht dargestellt, siehe Fig. 1a und 1b).

Parallel zur Bremsscheibe 4 weist der Scheibenumgriff 8 beidseits zu dieser jeweils einen bogenartigen Nabenschwung 10a, 10b auf. Die beiden Nabenschwünge 10a, 10b sind parallel zur Bremsscheibendrehachse bzw. Fahrzeug-Radachse 9 über Rahmenteile 11a, 11b miteinander verbunden.

Der Bremsträger 2 weist ferner auf jeder Seite der Bremsscheibe 4 zwei in den Scheibenumgriff 8 integrierte, von den Rahmenteilen 11a, 11b im Bereich einer (definitionsgemäß nachfolgend als Grundfläche 12 bezeichneten) Fläche bzw. Ebene nach oben vorkragende sowie hier symmetrisch zu jeweils einem der Nabenschwünge 10a, 10b angeordnete und in einer Ebene parallel zur Bremsfläche der Bremsscheibe 4 hintereinander angeordnete Trägerhörner 13, 14 auf, die zur Abstützung von Bremsbelägen (hier nicht dargestellt) dienen.

Die Trägerhörner 13, 14 bilden mit unteren Stützstellen 15, 16 sowie seitlichen Stützstellen 17, 18 des Bremsträgers 2 jeweils einen von zwei Bremsbelagschächten aus, die jeweils eine Belagträgerplatte eines Bremsbelags (nicht dargestellt) in Umfangsrichtung, d.h. einlaufseitig und auslaufseitig sowie nach unten hin abstützen bzw. führen. Der Bremsbelag stützt sich in y-Richtung -bezogen auf das Koordinatensystem in Fig. 2- auf jeweils zwei unteren Stützstellen 15, 16 auf dem Bremsträger 2 ab, die gleichzeitig den radialen Abstand des Bremsbelags zur Fahrzeugachse-Radachse 9 definieren. Die Stützstellen 15, 16, 17, 18 sind durch ein Härteverfahren besonders verschleißbeständig ausgeführt.

Zur Befestigung des Bremsträgers 2 an dem Achsflansch 5 des Achskörpers 6 weist der Bremsträger 2 Befestigungsbohrungen 19 auf, über die der Bremsträger 2 mit dem Achsflansch 5 (hier nicht dargestellt, siehe Fig. 1a und 1b) verschraubt ist. Die Mittelachsen der Befestigungsbohrungen 19 liegen parallel zur Y-Achse (siehe Koordinatensystem in Fig. 2) und liegen demnach im Wesentlichen radial zur Fahrzeug-Radachse 9. Ausgehend von der Grundfläche 12 münden die Bohrungen jeweils in der Auflagefläche 20, 21 die im montierten Zustand des Bremsträgers 2 jeweils den Achsflansch 5 kontaktiert.

An Befestigungsstellen 22 werden Lagerbolzen für einen Schiebesattel befestigt (hier nicht dargestellt). Die Funktion eines Schiebesattels ist dem Fachmann an sich bekannt und muss hier deshalb nicht näher beschrieben werden.

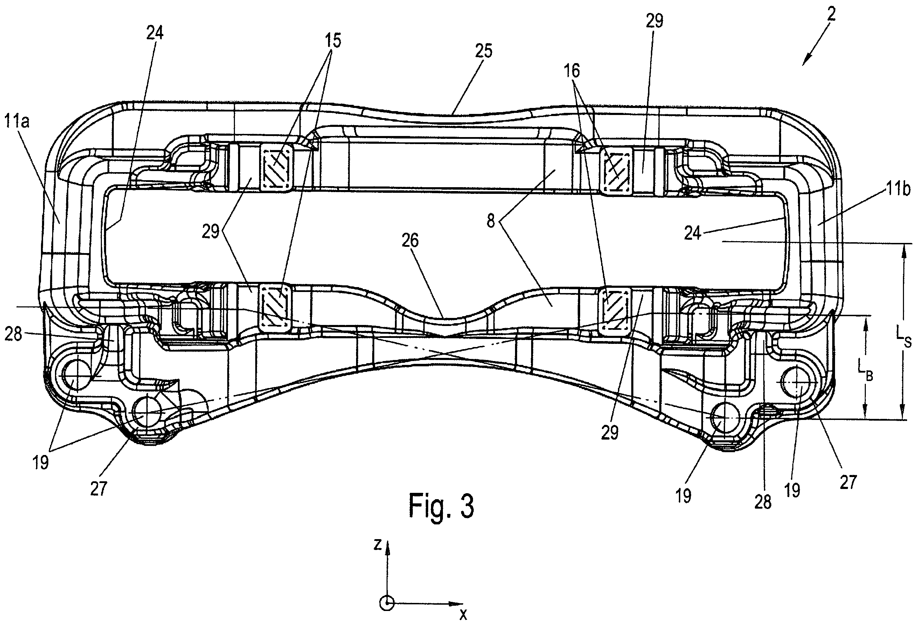

In Fig. 2 bzw. Fig. 3 ist jeweils nur der Bremsträger 2 dargestellt. Der Bremsträger 2 weist im Bereich des Nabenschwungs 10a einen aufgedickten Steg 23 auf. Dadurch wird in vorteilhafter Weise die Bauteilsteifigkeit im Bereich des Scheibenumgriffs 8 verbessert und einer Verformung des im Wesentlichen rechteckigen Scheibenumgriffs 8 zu einem Parallelogramm unter einer Betriebslast während eines Bremsvorgangs entgegengewirkt. Durch die Reduzierung der Verformung unter Last ergibt sich eine vorteilhaft reduzierte mechanische Spannung im Bereich des Nabenschwungs 10a des Bremsträgers 2.

Die der Bremsscheibe 4 zugewandte Geometrie des Scheibenumgriffs 8 im Bereich des Rahmenteils 11a, 11b weist jeweils einen torusförmigen Konturzug 24 auf. Dadurch wird in vorteilhafter Weise die Bauteilsteifigkeit im Bereich des Scheibenumgriffs 8 verbessert und einer Verformung des im Wesentlichen rechteckigen Scheibenumgriffs 8 zu einem Parallelogramm unter einer Betriebslast während eines Bremsvorgangs entgegengewirkt. Durch die Reduzierung der Verformung unter Last ergibt sich eine vorteilhaft reduzierte mechanische Spannung im Bereich des Rahmenteils 11a, 11b des Bremsträgers 2.

Der aufgedickte Steg 23 weist in einer Ebene parallel zur X-Z-Ebene (siehe Koordinatensystem in Fig. 2) eine Taillierung 25 auf. Ebenso weist ein Steg im Bereich des Nabenschwungs 10b eine Taillierung 26 in einer Ebene parallel zur X-Z-Ebene (siehe Koordinatensystem in Fig. 2) auf. Durch die Taillierungen 25, 26 werden vorteilhaft mechanische Spannungsspitzen im Bremsträger 2 abgebaut.

Der Bremsträger 2 weist ferner jeweils im Bereich der Befestigungsbohrungen 19 eine konsolenartige Verdickung 27 auf, die seitlich außerhalb des Scheibenumgriffs 8 ausgebildeten ist. Die konsolenartige Verdickung 27 ist jeweils durch eine Verstärkungsrippe 28 am Rahmenteil 11 a, bzw. 11b abgestützt. Dadurch wird in vorteilhafter Weise die Bauteilsteifigkeit im Bereich der Auflagefläche 20 bzw. 21 reduziert. Durch die Reduzierung der Verformung unter Last ergibt sich eine vorteilhaft reduzierte mechanische Spannung im Bereich der Auflagefläche 20 bzw. 21 des Bremsträgers 2.

Der Bremsträger 2 weist jeweils im Übergangsbereich der unteren Stützstelle 15, 16 zur oberen Stützstelle 17, 18 bzw. zum Trägerhorn 13, 14 eine Entlastungskerbe 29 auf. Dadurch wird in vorteilhafter Weise die Bauteilsteifigkeit im Bereich der Trägerhörner 13, 14 reduziert. Durch die Reduzierung der Verformung unter Last ergibt sich eine vorteilhaft reduzierte mechanische Spannung im Bereich der Trägerhörner 13, bzw. 14 des Bremsträgers 2.

Darüber hinaus weist der Bremsträger eine Schnittstelle 30 für eine optische Verschleißanzeige auf.

In Fig. 3 ist gut erkennbar dargestellt, dass der Bremsträger 2 so gestaltet ist, dass ein kurzer, direkter Kraftfluss zwischen der Krafteinleitung jeweils über die Trägerhörner 13, 14 bzw. über die Stützstellen 15, 16, 17, 18 und der Kraftausleitung jeweils über die Befestigungsbohrungen 19 realisiert ist (siehe Strich-Doppelpunkt-Linien in Fig. 3). Der Kraftfluss erfolgt ist darüber hinaus jeweils über entsprechend ausgesteifte Geometrieausprägungen des Bremsträgers 2. Dadurch wird in vorteilhafter Weise die Belastung des Bremsträgers 2 und des Achsflansches 5 reduziert und der Werkstoff des Bremsträgers 2 hinsichtlich seiner Belastbarkeit optimal ausgenutzt.

Diese vorteilhafte Gestaltung des Bremsträgers 2 ermöglicht eine besonders hohe Lebensdauer des Bremsträgers 2 und ist erforderlich, da ein Abstand L_{B} zwischen den Befestigungsbohrungen 19 und den Traghörnern 13, 14 bzw. den Stützstellen 15, 16, 17, 18 bzw. zwischen den Befestigungsbohrungen 19 und ein Abstand L_{S} zwischen den Befestigungsbohrungen 19 und der Bremsscheibe 4 (in Fig. 3 nicht dargestellt) größer ist als bei Bremsträgern nach dem Stand der Technik. Das Verhältnis zwischen LS zu LB liegt vorzugsweise zwischen 1 : 1,1 und 1 : 1,6; besonders bevorzugt zwischen 1: 1,3 und 1 :1,4.

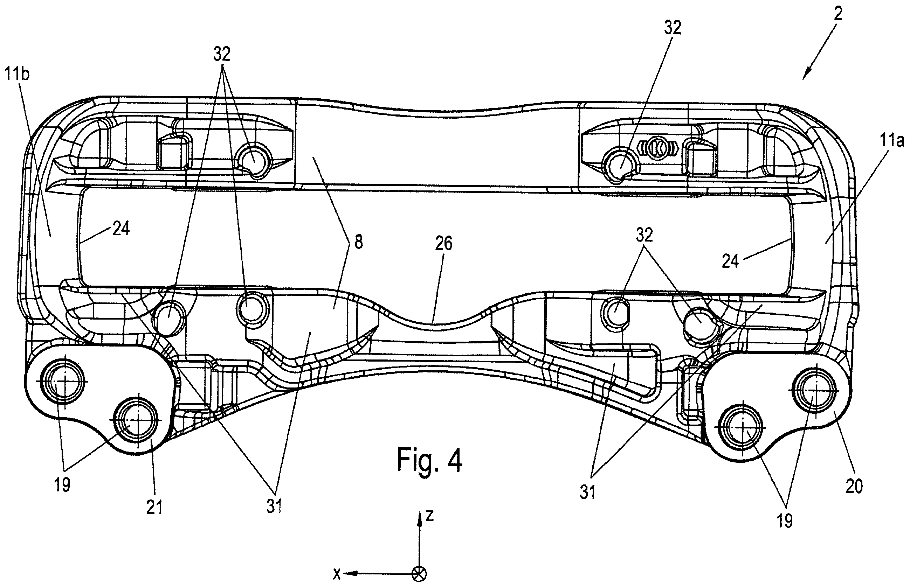

In Fig. 4 ist eine Untersicht des Bremsträgers 2 dargestellt. Der Bremsträger 2 weist im Bereich des Scheibenumgriffs 8 mehrere Taschen bzw. Ausnehmungen 31 auf. Durch eine vorteilhafte Anordnung und Formgebung der Taschen bzw. Ausnehmungen 31 wird Gewicht eingespart ohne die mechanischen Eigenschaften des Bremsträgers 2 nennenswert zu verschlechtern.

Der Bremsträger 2 weist darüber hinaus mehrere domartige Spannflächen 32 auf. Durch die Anzahl und Positionierung der Spannflächen 32 können unterschiedliche Spannkonzepte bei der mechanischen Bearbeitung eines Bremsträgerrohteils verwirklicht werden, so dass eine kostengünstige und damit vorteilhafte mechanische Bearbeitung des Bremsträgerrohteils zu einem montagefähigen Bremsträger 2 realisiert werden kann.

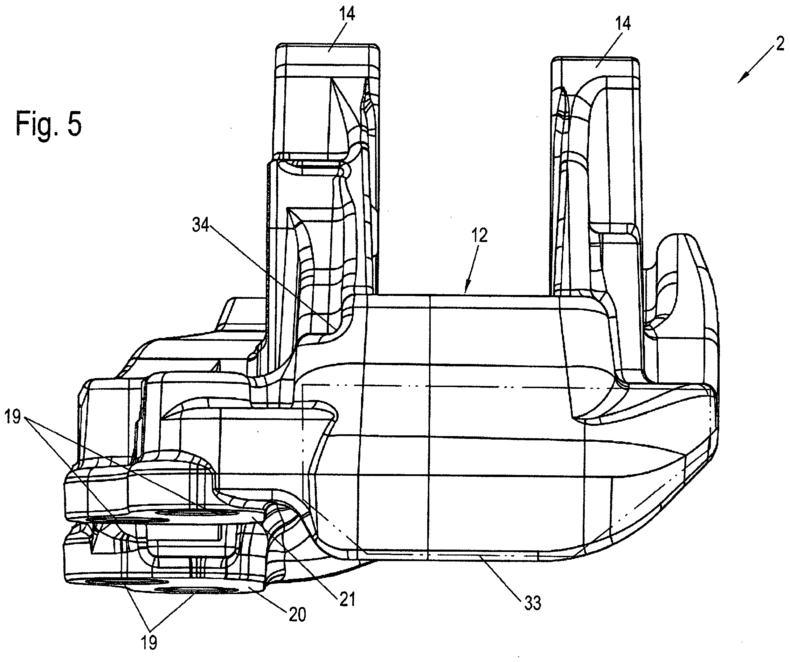

In Fig. 5 ist eine Seitenansicht von rechts des Bremsträgers 2 dargestellt. Gut erkennbar ist eine Gestaltung des Scheibenumgriffs 8 im Bereich des Rahmenteils 10a bzw. 11b mit einem trapezförmigen Querschnitt 33 (siehe Strich-Doppelpunkt-Linie in Fig. 5). Darüber hinaus weist der Bremsträger 2 eine optische Verschleißanzeige in Form einer definierten Geometrie 34 auf.

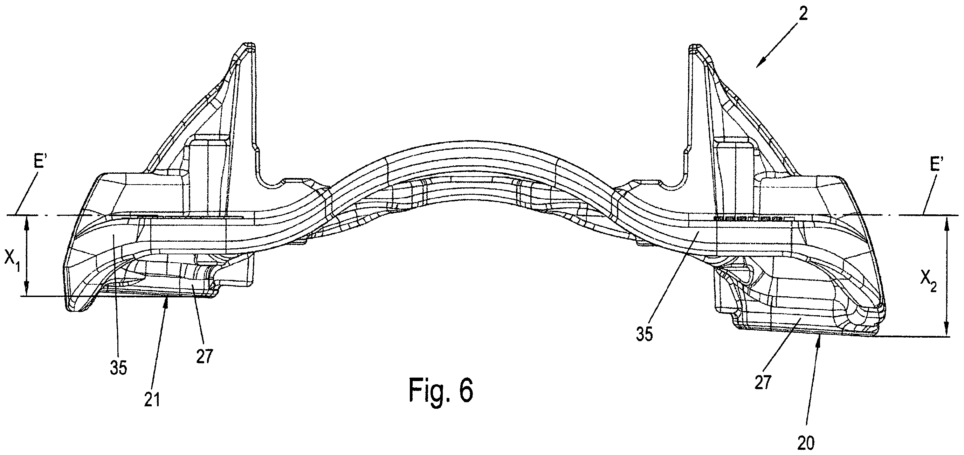

In Fig. 6 sind die unterschiedlichen Höhenniveaus der Auflageflächen 20 bzw. 21 gut sichtbar dargestellt. Durch deren Ausbildung in einem Winkel α relativ zu einer horizontalen Fahrzeugebene E ist -im Gegensatz zu Bremsträgern nach dem Stand der Technik- jeweils der Bremsträger 2 das variantentreibende Bauteil zur Realisierung von Bauräumen z.B. für einen Bremszylinder.

Die Auflageflächen 20 bzw. 21 weisen zu einer Ebene E' parallel zu der horizontalen, fahrzeugbezogenen Ebene E jeweils eine unterschiedliche vertikale Erstreckung X₁, X₂ auf.

Der Bremsträger 2 weist auf seiner der Fahrzeuglängsachse zugewandten Seite eine Verstärkungsrippe 35 auf. Die Verstärkungsrippe 35 ist auf dieser Seite im Wesentlichen symmetrisch zu einer Y-Z-Ebene gestaltet. Die Verstärkungsrippe 35 folgt dem Nabenschwung 10b und setzt sich jeweils im Bereich des Rahmenteils 11a bzw. 11b fort, um schließlich um unteren Bereich bzw. in einer weitestmöglichen Richtung negativer y-Werte in Bezug auf das Koordinatensystem in Fig. 6 des Rahmenteils 11a bzw. 11b auszulaufen.

Durch die Gestaltung der Verstärkungsrippe 35 wird in vorteilhafter Weise eine gleichmäßige Verformung des Scheibenumgriffs 8 sowie des Rahmenteils 11a bzw. 11b erreicht. Dadurch ergibt sich eine gleichmäßige Belastung der Bauteilquerschnitte im Bereich des Scheibenumgriffs 8 sowie im Rahmenteil 11a bzw. 11b und damit einhergehend eine homogene Verteilung der mechanischen Spannungen ohne signifikante Spannungsspitzen im Bereich des Scheibenumgriffs 8 sowie im Rahmenteil 11a bzw. 11b.

Die bevorzugte Gestaltung des Bremsträgers 2 eröffnet also die Möglichkeit -sofern die gleiche Verformung wie bei einem Bremsträger nach dem Stand der Technik zugelassen wird- im Vergleich zu Bremsträgern nach dem Stand der Technik das Gewicht des Bremsträgers 2 gezielt zu reduzieren, da sich auch bei entsprechenden Verformungen keine erhöhten Spannungsspitzen ergeben und es so möglich wird, gezielt Werkstoff beim Bremsträger 2 einzusparen, um so einen gewichts- und kostenoptimierten Bremsträger 2 zu erhalten.

Anders herum kann ein bevorzugter Bremsträger 2 mit höheren zyklisch wirkenden Kräften beaufschlagt werden, ohne dabei Lebensdauereinbußen hinnehmen zu müssen. Dadurch ergibt sich eine mögliche höhere Leistung eines erfindungsgemäßen Bremsträger 2 bei einem optimierten Leistungsgewicht.

Die vorteilhafte Geometrie eines bevorzugten Bremsträgers 2 lässt sich besonders einfach über ein Gießverfahren fertigungstechnisch darstellen. Bevorzugt wird der erfindungsgemäße Bremsträger 2 aus einem duktilen Gusswerkstoff, wie beispielsweise Gusseisen mit Kugelgraphit hergestellt.

### Bezugszeichenliste

- 1: Scheibenbremse
- 2: Bremsträger
- 3: Bremssattel
- 4: Bremsscheibe
- 5: Achsflansch
- 6: Achskörper
- 7: Schraube
- 8: Scheibenumgriff
- 9: Fahrzeug-Radachse
- 10a, 10b: Nabenschwung
- 11a, 11b: Rahmenteil
- 12: Grundfläche
- 13: Trägerhorn
- 14: Trägerhorn
- 15: Untere Stützstelle
- 16: Untere Stützstelle
- 17: Obere Stützstelle
- 18: Obere Stützstelle
- 19: Befestigungsbohrungen
- 20: Auflagefläche
- 21: Auflagefläche
- 22: Befestigungsstelle
- 23: Steg
- 24: Torusförmiger Konturzug
- 25: Taillierung
- 26: Taillierung
- 27: Verdickung
- 28: Verstärkungsrippe
- 29: Entlastungskerbe
- 30: Schnittstelle
- 31: Ausnehmung
- 32: Spannfläche
- 33: Trapezförmiger Querschnitt
- 34: Geometrie
- 35: Verstärkungsrippe

- A: Befestigungsebene
- L_{B}: Abstand
- L_{S}: Abstand
- E: Ebene
- X₁, X₂: Erstreckung (Maß)

## Patentansprüche

1. Achsanordnung eines Fahrzeugs mit wenigstens einem Achskörper mit einem Achsflansch und einer Scheibenbremse (1), die zumindest einen Bremssattel, insbesondere einen Schiebesattel, eine Zuspanneinheit und eine Bremsscheibe (4) sowie einen Bremsträger (2) aufweist, wobei der Bremsträger folgendes aufweist:
a. einen rahmenartigen Scheibenumgriff (8) zum Umgreifen eines Randes einer Bremsscheibe (4) der Scheibenbremse (1), der zwei zueinander parallele Nabenschwünge (10a, 10b) aufweist und zwei diese Nabenschwünge (10a, 10b) verbindende Rahmenteile (11a, 11b),
b. zueinander beabstandete, in einer in einer gemeinsamen Ebene liegende, Auflageflächen (20, 21), welche im montierten Zustand an dem Achsflansch (5) des Achskörpers in einer horizontalen Befestigungsebene des Achsflansches (5) anliegen, wobei die Auflageflächen (20, 21) an seitlich außerhalb des Scheibenumgriffs (8) ausgebildeten konsolenartigen Verdickungen (27) des Bremsträgers (2) ausgebildet sind,
c. Befestigungsbohrungen (19) in den Auflageflächen (20, 21), über die der Bremsträger (2) mit dem Achsflansch (5) des Achskörpers verschraubbar ist,
**dadurch gekennzeichnet, dass**
d. die beiden konsolenartigen Verdickungen (27) ferner relativ zueinander jeweils eine unterschiedliche vertikale Erstreckung (X1, X2) aufweisen, so dass der Bremssattel (3) der Scheibenbremse (1) um einen definierten Winkel α im oder gegen den Uhrzeigersinn relativ zu der Befestigungsebene (A) verdreht ist.

2. Achsanordnung nach Anspruch 1, **dadurch gekennzeichnet, dass** die Befestigungsebene (A) zwischen Bremsträger (2) und dem Achsflansch (5) eines Achskörpers (6) radial zu der Fahrzeug-Radachse (9) liegt.

3. Achsanordnung nach Anspruch 1, **dadurch gekennzeichnet, dass** der Bremsträger (2) auf jeder Seite einer Bremsscheibe (4) zwei Paare von Trägerhörnern (13, 14) aufweist.

4. Achsanordnung nach Anspruch 2 , **dadurch gekennzeichnet, dass** die Trägerhörner (13, 14) jeweils untere Stützstellen (15, 16) sowie seitliche Stützstellen (17, 18) für jeweils einen Bremsbelag ausbilden.

5. Achsanordnung nach Anspruch 3, **dadurch gekennzeichnet, dass** die Stützstellen (15, 16, 17, 18) durch ein Härteverfahren verschleißbeständig ausgeführt sind.

6. Achsanordnung nach einem der vorgenannten Ansprüche, **dadurch gekennzeichnet, dass** die Mittelachsen der Befestigungsbohrungen (19) radial zur Fahrzeug-Radachse (9) liegen.

7. Achsanordnung nach einem der vorgenannten Ansprüche, **dadurch gekennzeichnet, dass** der Bremsträger (2) einen aufgedickten Steg (23) aufweist.

8. Achsanordnung nach Anspruch 6, **dadurch gekennzeichnet, dass** der aufgedickte Steg (23) eine Taillierung (25) aufweist.

9. Achsanordnung nach einem der vorgenannten Ansprüche, **dadurch gekennzeichnet, dass** ein Steg im Bereich des Nabenschwungs (10b) eine Taillierung (26) aufweist.

10. Achsanordnung nach einem der vorgenannten Ansprüche, **dadurch gekennzeichnet, dass** die der Bremsscheibe (4) zugewandte Geometrie eines Scheibenumgriffs (8) im Bereich des Rahmenteils (11a, 11 b) jeweils einen torusförmigen Konturzug (24) aufweist.

11. Achsanordnung nach einem der Ansprüche 1 bis 10, **dadurch gekennzeichnet, dass** die konsolenartige Verdickung (27) jeweils durch eine Verstärkungsrippe (28) am Rahmenteil (11a, bzw. 11 b) abgestützt ist.

12. Achsanordnung nach einem der Ansprüche 1 bis 11, **dadurch gekennzeichnet, dass** der Bremsträger (2) jeweils im Übergangsbereich der unteren Stützstelle (15, 16) zur oberen Stützstelle (17, 18) bzw. zum Trägerhorn (13, 14) eine Entlastungskerbe (29) aufweist.

13. Achsanordnung nach einem der vorgenannten Ansprüche, **dadurch gekennzeichnet, dass** der Bremsträger (2) eine Schnittstelle (30) für eine optische Verschleißanzeige aufweist.

14. Achsanordnung nach einem der Ansprüche 3 bis 13, **dadurch gekennzeichnet, dass** der Bremsträger (2) so gestaltet ist, dass ein kurzer, direkter Kraftfluss zwischen der Krafteinleitung jeweils über die Trägerhörner (13, 14) bzw. über die Stützstellen (15, 16, 17, 18) und der Kraftausleitung jeweils über die Befestigungsbohrungen (19) realisiert ist.

15. Achsanordnung nach einem der vorgenannten Ansprüche, **dadurch gekennzeichnet, dass** der Kraftfluss jeweils über entsprechend ausgesteifte Geometrieausprägungen des Bremsträgers (2) erfolgt.

16. Achsanordnung nach einem der Ansprüche 3 bis 15, **dadurch gekennzeichnet, dass** das Verhältnis zwischen dem Abstand (LB) zwischen den Befestigungsbohrungen (19) und den Traghörnern (13, 14) bzw. den Stützstellen (15, 16, 17, 18) bzw. zwischen den Befestigungsbohrungen (19) und dem Abstand (LS) zwischen den Befestigungsbohrungen (19) und der Bremsscheibe (4) vorzugsweise zwischen 1 : 1,1 und 1 : 1,6; besonders bevorzugt zwischen 1: 1,3 und 1 :1,4 liegt.

17. Achsanordnung nach einem der vorgenannten Ansprüche, **dadurch gekennzeichnet, dass** der Bremsträger (2) im Bereich des Scheibenumgriffs (8) mehrere Taschen bzw. Ausnehmungen (31) aufweist.

18. Achsanordnung nach einem der vorgenannten Ansprüche, **dadurch gekennzeichnet, dass** der Bremsträger (2) mehrere domartige Spannflächen (32) aufweist.

19. Achsanordnung nach einem der vorgenannten Ansprüche, **dadurch gekennzeichnet, dass** der Scheibenumgriff (8) im Bereich des Rahmenteils (10a bzw. 11b) mit einem trapezförmigen Querschnitt (33) gestaltet ist.

20. Achsanordnung nach einem der vorgenannten Ansprüche, **dadurch gekennzeichnet, dass** der Bremsträger (2) eine optische Verschleißanzeige in Form einer definierten Geometrie (34) aufweist.

21. Achsanordnung nach einem der vorgenannten Ansprüche, **dadurch gekennzeichnet, dass** der Bremsträger (2) auf seiner der Fahrzeuglängsachse zugewandten Seite eine Verstärkungsrippe (35) aufweist.

22. Achsanordnung nach Anspruch 21, **dadurch gekennzeichnet, dass** die Verstärkungsrippe (35) dem Nabenschwung (10b) folgt und dass sich die Verstärkungsrippe (35) jeweils im Bereich des Rahmenteils (11 a bzw. 11 b) fortsetzt, wobei die Verstärkungsrippe (35) im unteren Bereich des Rahmenteils (11 a bzw. 11 b) ausläuft.

23. Achsanordnung nach einem der vorgenannten Ansprüche, **dadurch gekennzeichnet, dass** der Bremsträger (2) einstückig ausgebildet ist und dass der Bremsträger (2) durch ein Gießverfahren hergestellt ist.

## Claims

1. An axle arrangement of a vehicle having at least one axle body with an axle flange and a disc brake (1) comprising at least one brake calliper, in particular a sliding calliper, an application unit, a brake disc (4) and a brake carrier (2), this brake carrier having the following:
a. a frame-like disc holder (8) for holding an edge of a brake disc (4) of the disc brake (1), this disc holder (8) having two parallel hub curves (10a, 10b) and two frame portions (11a, 11b) that connect these hub curves (10a, 10b),
b. contact surfaces (20, 21) that are located a certain distance apart in a common plane and that, when fitted, abut the axle flange (5) of the axle body in a horizontal fixing plane of the axle flange (5), these contact surfaces (20, 21) being configured on bracket-shaped bulges (27) of the brake carrier (2) that are configured laterally outside the disc holder (8),
c. fixing holes (19) in the contact surfaces (20, 21) via which the brake carrier can be screwed to the axle flange (5) of the axle body,
**characterised in that**
d. in addition, the two bracket-shaped bulge (27) each have vertical extensions (X1, X2) that are different from one another such that the brake calliper (3) of the disc brake (1) is rotated about a defined angle α clockwise or counter-clockwise relative to the fixing plane (A).

2. An axle arrangement according to claim 1, **characterised in that** the fixing plane (A) is located radially to the vehicle wheel axle (9) between the brake carrier (2) and the axle flange (5) of an axle body.

3. An axle arrangement according to claim 1, **characterised in that** the brake carrier (2) has two pairs of carriers horns (13, 14) on either side of a brake disc (4).

4. An axle arrangement according to claim 2, **characterised in that** the carrier horns (13, 14) each form lower supporting points (15, 16) and lateral supporting points (17, 18) for a brake pad.

5. An axle arrangement according to claim 3, **characterised in that** the supporting points (15, 16, 17, 18) are wear resistant by dint of a hardening process.

6. An axle arrangement according to any one of the preceding claims, **characterised in that** the centre axes of the fixing holes (19) are located radially to the vehicle wheel axle (9).

7. An axle arrangement according to any one of the preceding claims, **characterised in that** the brake carrier (2) has a thickened web (23).

8. An axle arrangement according to claim 6, **characterised in that** the thickened web (23) has a waist (25).

9. An axle arrangement according to any one of the preceding claims, **characterised in that** a web has a waist (25) in the region of the hub curve (10b).

10. An axle arrangement according to any one of the preceding claims, **characterised in that** the geometry facing the brake disc (4) of a disc holder (8) has a torus-shaped contour line (24) in the region of the frame portion (11a, 11b)

11. An axle arrangement according to any one of claims 1 to 10, **characterised in that** the bracket-shaped bulge (27) is supported by a reinforcing rib (28) on the frame portion (11a/11b).

12. An axle arrangement according to any one of claims 1 to 11, **characterised in that** the brake carrier (2) has a relief notch (29) in the transition region from the lower supporting point (15, 16) to the upper supporting point (17, 18) or carrier horn (13, 14).

13. An axle arrangement according to any one of the preceding claims, **characterised in that** the brake carrier (2) has an interface (30) for an optical wear indicator.

14. An axle arrangement according to any one of claims 3 to 13, **characterised in that** the brake carrier (2) is designed such that a short, direct flow of forces runs between the force introduction point via the carrier horns (13, 14) or supporting points (15, 16, 17, 18) and the force exit point via the fixing holes (19).

15. An axle arrangement according to any one of the preceding claims, **characterised in that** flow of forces runs through correspondingly designed geometric elements of the brake carrier (2).

16. An axle arrangement according to any one of claims 3 to 15, **characterised in that** the ratio between the distance (LB) between the fixing holes (19) and the carrier horns (13, 14) or the supporting points (15, 16, 17, 18) or between the fixing holes (19), and the distance (LS) between the fixing holes (19) and the brake disc (4) is preferably between 1:1.1 and 1:1.6, particularly preferably between 1:1.3 and 1:1.4.

17. An axle arrangement according to any one of the preceding claims, **characterised in that** the brake carrier (2) has a plurality of pockets or recesses (31) in the region of the disc holder (8).

18. An axle arrangement according to any one of the preceding claims, **characterised in that** the brake carrier (2) has a plurality of dome-shaped clamping surfaces (32).

19. An axle arrangement according to any one of the preceding claims, **characterised in that** the disc holder (8) is designed with a trapezoidal cross section (33) in the region of the frame portion (10a/11b).

20. An axle arrangement according to any one of the preceding claims, **characterised in that** the brake carrier (2) has an optical wear indicator in the form of a defined geometry (34).

21. An axle arrangement according to any one of the preceding claims, **characterised in that** the brake carrier (2) has a reinforcing rib (35) on its side facing the longitudinal axis of the vehicle.

22. An axle arrangement according to claim 21, **characterised in that** the reinforcing rib (35) follows the hub curve (10b) and that the reinforcing rib (35) continues in the region of the frame portion (11a/11b), the reinforcing rib (35) ending in the lower region of the frame portion (11a/11b).

23. An axle arrangement according to any one of the preceding claims, **characterised in that** the brake carrier (2) is formed in one piece and that the brake carrier (2) is produced using a casting process.

## Revendications

1. Agencement d'essieu d'un véhicule, comprenant au moins un corps d'essieu ayant un collet d'essieu et un frein (1) à disque, qui a au moins un étrier de frein, notamment un étrier coulissant, une unité de serrage et un disque (4) de frein, ainsi qu'un flasque (2) de frein, le flasque de frein ayant ce qui suit :
a. une enveloppe (8) de disque de type en cadre pour envelopper un bord d'un disque (4) du frein (1) à disque, enveloppe qui a deux volants (10a, 10b) de moyeu parallèles et deux parties (11a, 1b) de cadre reliant ces volants (10a, 10b) de moyeu,
b. des surfaces (20, 21) de support se trouvant à distance l'une de l'autre dans un plan commun et s'appliquant à l'état monté au collet (5) d'essieu du corps d'essieu dans un plan horizontal de fixation du collet (5) d'essieu, les surfaces (20, 21) de support étant constituées sur des épaississements (27) du flasque (2) d'essieu de type en console constitués latéralement à l'extérieur de l'enveloppe (8) du disque,
c. des trous (19) de fixation dans les surfaces (20, 21) de support, trous par lesquels le flasque (2) d'essieu peut être vissé au collet (5) d'essieu du corps de l'essieu,
**caractérisé en ce que**
d. les deux épaississements (27) de type en console ont, en outre, une étendue (X1, X2) verticale différente l'une de l'autre, de manière à ce que l'étrier (3) du frein (1) à disque soit tourné d'un angle α défini dans le sens des aiguilles d'une montre ou dans le sens contraire par rapport au plan (A) de fixation.

2. Agencement d'essieu suivant la revendication 1, **caractérisé en ce que** le plan (A) de fixation se trouve radialement par rapport à l'axe d'essieu (9) du véhicule entre le flasque (2) de frein et le collet (5) d'essieu d'un corps (6) d'essieu.

3. Agencement d'essieu suivant la revendication 1, **caractérisé en ce que** le flasque (2) de frein a, de chaque côté d'un disque (4) de frein, deux paires de rebords (13, 14) de flasque.

4. Agencement d'essieu suivant la revendication 2, **caractérisé en ce que** les rebords (13, 14) de flasque forment respectivement des points (15, 16) d'appui inférieurs, ainsi que des points (17, 18) d'appui latéraux pour respectivement une garniture de frein.

5. Agencement d'essieu suivant la revendication 3, **caractérisé en ce que** les points (15, 16, 17, 18) d'appui sont réalisés en étant résistants à l'usure par un procédé de durcissement.

6. Agencement d'essieu suivant l'une des revendications précédentes, **caractérisé en ce que** les axes médians des trous (19) de fixation sont radiaux par rapport à l'essieu (9) du véhicule.

7. Agencement d'essieu suivant l'une des revendications précédentes, **caractérisé en ce que** le flasque (2) de frein a une entretoise (23) épaissie.

8. Agencement d'essieu suivant la revendication 6, **caractérisé en ce que** l'entretoise (23) épaissie a un taillage (25).

9. Agencement d'essieu suivant l'une des revendications précédentes, **caractérisé en ce qu'**une entretoise a un taillage (26) dans la région du volant (10b) de moyeu.

10. Agencement d'essieu suivant l'une des revendications précédentes, **caractérisé en ce que** la géométrie, tournée vers le disque (4) de frein, d'une enveloppe (8) de disque a, dans la région de la partie (11a, 11b) de cadre, respectivement un trait (24) de contour en forme de tore.

11. Agencement d'essieu suivant l'une des revendications 1 à 10, **caractérisé en ce que** l'épaississement (27) de type en console s'appuie respectivement par une nervure (28) de renfort sur la partie (11a ou 11b) du cadre.

12. Agencement d'essieu suivant l'une des revendications 1 à 11, **caractérisé en ce que** le flasque (2) de frein a respectivement, dans la partie de transition du point (15, 16) inférieur au point (17, 18) d'appui supérieur ou vers le rebord (13, 14) du flasque, une encoche (29) de détente.

13. Agencement d'essieu suivant l'une des revendications précédentes, **caractérisé en ce que** le flasque (2) de frein a une interface (30) pour une indication visuelle d'usure.

14. Agencement d'essieu suivant l'une des revendications 3 à 13, **caractérisé en ce que** le flasque (2) de frein est conformé de manière à réaliser un flux de force court et direct entre l'entrée de force respectivement par les rebords (13, 14) du flasque ou par les points (15, 16, 17, 18) d'appui et la sortie de force respectivement par les trous (19) de fixation.

15. Agencement d'essieu suivant l'une des revendications précédentes, **caractérisé en ce que** le flux de force s'effectue respectivement par des estampages géométriques rigidifiés adéquats du flasque (2) de frein.

16. Agencement d'essieu suivant l'une des revendications 3 à 15, **caractérisé en ce que** le rapport entre la distance (LB) entre les trous (19) de fixation et les rebords (13, 14) de flasque ou les points (15, 16, 17, 18) d'appui ou entres les trous (19) de fixation et la distance (LS) entre les trous (19) de fixation et le disque (4) de frein sont, de préférence, compris entre 1:1,1 et 1:1,6 ; d'une manière particulièrement préféré entre 1:1,3 et 1:1,4.

17. Agencement d'essieu suivant l'une des revendications précédentes, **caractérisé en ce que** le flasque (2) de frein a, dans la région de l'enveloppe (8) du disque, plusieurs poches ou évidements (31).

18. Agencement d'essieu suivant l'une des revendications précédentes, **caractérisé en ce que** le flasque (2) de frein a plusieurs surfaces (32) de tension de type en dôme.

19. Agencement d'essieu suivant l'une des revendications précédentes, **caractérisé en ce que** l'enveloppe (8) du disque est, dans la région de la partie (10a ou 1b) de cadre, conformée en ayant une section (33) transversale trapézoïdale.

20. Agencement d'essieu suivant l'une des revendications précédentes, **caractérisé en ce que** le flasque (2) de frein a une indication visuelle d'usure sous la forme d'une géométrie (34) définie.

21. Agencement d'essieu suivant l'une des revendications précédentes, **caractérisé en ce que** le flasque (2) de frein a une nervure (35) de renfort du côté tourné vers l'axe longitudinal du véhicule.

22. Agencement d'essieu suivant la revendication 21, **caractérisé en ce que** la nervure (35) de renfort suit le volant (10b) de moyeu et **en ce que** la nervure (35) de renfort se prolonge respectivement dans la région de la partie (11a ou 11b) du cadre, la nervure (35) de renfort s'étendant dans la région inférieure de la partie (11a ou 11b) du cadre.

23. Agencement d'essieu suivant l'une des revendications précédentes, **caractérisé en ce que** le flasque (2) de frein est constitué d'une seule pièce et **en ce que** le flasque (2) de frein est fabriqué par un procédé de coulée.
